# EUROPEAN PATENT APPLICATION

(11) **EP 1 821 555 A1**
(43) Date of publication of application: **22.08.2007**
(21) Application number: 06804971.7
(22) Date of filing: 18.10.2006
(51) Int. Cl.: H04Q 7/32

(54) **METHOD AND SYSTEM FOR SHARING MEMORY AREA OF MOBILE TERMINAL**

(30) Priority: 21.10.2005 CN 200510031056
(71) Applicant: Huawei Technologies Co., Ltd., Shenzhen, Guangdong Province 518129 (CN)
(72) Inventor: YANG, Pengliang, Guangdong province 518219 (CN); ZHANG, Yong, Guangdong Province 518219 (CN); LI, Guiwen, Guangdong Province 518219 (CN)
(74) Representative: Viering, Jentschura & Partner
(86) International application number: PCT/CN2006/002752
(87) International publication number: WO 2007/045170

(57) **Abstract**

A method and system for sharing memory area of mobile terminal relating to the mobile communication technology are disclosed, the present invention can realize applying for a sharing memory area from a mobile terminal to a server on the network side, which is accessed for the mobile terminal itself or other mobile terminals. In the present invention, the mobile terminal could apply for a sharing memory area to the server on the network side, if the applying is valid, the server on the network side assigns a sharing memory area for it and generates or acquires from the mobile terminal the authentication information, after the mobile terminal or other mobile terminals log in the server on the network side based on the authentication information, they can read/write the sharing memory area. The sharing memory area could preset a sustaining time, when the time is over, the server on the network side releases the area automatically; or releases the sharing memory area when the releasing request is proposed by the mobile terminal which applying for the area, if the sustaining time is not preset.

## Description

### Field of the Invention

The present invention relates to mobile communication technology, and more particularly, to the technology for mobile terminals to share a storage space.

### Background of the Invention

In recent years, mobile communication keeps developing in a high speed, and new mobile communication technologies emerge endlessly. Presently, Global System for Mobile Communication (GSM) and Code Division Multiple Access (CDMA) system have become the mainstream mobile communication systems in China. These two systems are mainly used for providing voice conversation service. In order to incorporate data transmission function, functions of 2.5G such as General Packet Radio Service (GPRS) are added. In the near future, the Third Generation (3G) mobile communication systems, such as Wideband Code Division Multiple Access (WCDMA for short), CDMA 2000 and Time Division Synchronous Code Division Multiple Access (TD-SCDMA), will be put into commercial use in succession, With the development of mobile communication technology, mobile terminals, typically handsets, become more and more popular. In addition to conventional voice conversation, mobile terminals are also widely used for data communications such as web surfing, email sending and receiving, short message and so on. Especially when 3G becomes popular, bulk data communication such as video communication will increase gradually. In a Data communication, it is often required that related data, such as mails and video data, are kept on a mobile terminal. Such data are usually saved in the form of files, and may be managed on the mobile terminal via a built-in file management system. Common managing operations include, for example, opening, querying, modifying, deleting, saving, copying and moving, etc. If a mobile terminal has a component that may generate new data, such as a camera, the management of files such as photos will be in higher demand. These files accumulated with each passing day will bring increasing troubles to users.

On one hand, these files, especially multimedia files such as video files, require a large storage space. On the other hand, it is also a problem how to share files on one mobile terminal with another mobile terminal, especially when these two mobile terminals are not at the same place and cannot be connected with a cable or exchange memory cards. Moreover, security should be considered when files are shared, and unauthorized access should be prevented effectively.

### Summary of the Invention

In view of the above, the main object of the present invention is to provide a method and a system for mobile terminals to share a storage space, in which a mobile terminal may apply for a shared file space on the network side, which can be accessed by the mobile terminal itself or other mobile terminals.

To achieve the above object, the invention provides a method for mobile terminals to share a storage space, which includes:

A) sending a first message for applying for a shared storage space to a network side by a first mobile terminal;

B) allocating a corresponding shared storage space to the first mobile terminal at least partially according to the applying in the first message and sets authentication information for accessing the shared storage space ;

C) the first or other mobile terminals to log on the network side server using the authentication information and perform reading or writing access to the shared storage space.

The method further includes:

the network side server determines whether the applying in the first message is valid; and if it is valid, proceeding to step B; or otherwise, returning a reject message.

In addition, in the method, the authentication information contains user name and password for accessing the shared storage space.

The method further includes that the network side server sends the authentication information to the first mobile terminal.

In addition, the method further includes:

the network side server sends a second message to the first mobile terminal for requesting the first mobile terminal to provide the authentication information;

the first mobile terminal returns a message carrying the authentication information input by a user in response to the second message.

The method further includes the first mobile terminal or the network side server sets a duration of time for the shared storage space; and

when the duration of time for the shared storage space has expired, the network side server actively releases the shared storage space and informs the first mobile terminal.

The method further includes:

the first mobile terminal sends a fourth message for requesting release of the shared storage space to the network side server, with the fourth message carrying identification information of the mobile terminal;

if the identification information of the mobile terminal carried in the fourth message is identical with the identification information of the mobile terminal which applies for the shared storage space, the network side server releases the shared storage space according to the request in the fourth message.

The method further includes:

receiving an executable program uploaded by the first mobile terminal and a fifth message from the first mobile terminal for requesting execution of the executable program in the network side server;

performing the executable program in response to the requesting of the fifth message.

The method further includes:

setting on the network side server a first right, by the first mobile terminal, for other mobile terminals to access the shared storage space; and

determining, by the network side server, upon receiving a logon request of a mobile terminal, whether the logon request is initiated by the first mobile terminal, and if yes, allowing the mobile terminal to perform all operations on the shared storage space permitted by a network side preset strategy; or otherwise, allowing the mobile terminal to perform operations on the shared storage space within the scope specified by the first right.

In addition, in the method, the first right includes at least one of:

creating a file, reading a file, modifying a file, deleting a file and modifying properties of a file.

In addition, in the method, the first message includes at least one of:

size of the shared storage space applied for, time duration, application type and identification of the first mobile terminal.

The method further includes:

the first mobile terminal sends a third message for requesting modification of the authentication information to the network side server, wherein the third message carries identification information of the first mobile terminal;

if the identification information of the mobile terminal carried in the third message is identical with the identification information of the mobile terminal which applies for the shared storage space, the network side server modifies the authentication information for the shared storage space according to the request in the third message.

The invention further provides a system for mobile terminals to share a storage space, including mobile terminals and a network side server; the network side server further includes a file management system for managing a local storage space and providing an interface for operating on the local storage space to other modules of the network side server; the network side server further includes a remote access module which is used to exchange messages and data with a first mobile terminal, and after receiving a first message for applying for a shared storage space, invoke an interface provided by the local file management system so as to allocate a shared storage space to the first mobile terminal and set authentication information for accessing the shared storage space, and for a mobile terminal which logs on successfully, invoke an interface provided by the local file management system according to an operating command in a received message so as to perform operations on the shared storage space according to the command and return an operation result information to the corresponding mobile terminal.

By comparison, it can be seen that the technical solutions of the present invention differ from those of prior art mainly in that: a mobile terminal applies to a network side server for a shared storage space. If the application is valid, the network side server allocates a shared storage space for the mobile terminal and generates or obtains from the mobile terminal an authentication information. The mobile terminal or other mobile terminals, after logging onto the network side server with the authentication information, can perform read or write operations on the shared storage space.

The shared storage space may be preset with a duration of time, and if the duration of time has expired, the network side server releases the space automatical; or the shared storage space may not be preset with a duration of time, and the shared storage space is released when the mobile terminal that applies for the space sends a release request.

Only the mobile terminal that applies for the shared storage space can modify the authentication information or set access right for other mobile terminals which access the shared storage space.

An executable program stored in the shared storage space may be executed at the network side server upon request of the mobile terminal, and the executable program should first pass a harmlessness check before being executed. The harmlessness check includes, but not limited to, searching for potentially harmful code segment.

The technical solutions provided by the invention can bring about apparent beneficial effects, that is file exchange between mobile terminals is facilitated. Because a shared storage space applied for by one mobile terminal may be accessed by other mobile terminals conveniently, file exchange between mobile terminals can be realized. Furthermore, an access to a shared storage space needs authentication and the authentication information is only known to the mobile terminal which applies for the shared storage space and related mobile terminals informed by the mobile terminal. Security of file sharing can be ensured. The shared storage space is on the network side, so a mobile terminal, which exchanges files via a shared storage space, is not limited by geographic positions, but may be near at hand or may be far away.

The storage space of a mobile terminal is expanded. The shared storage space applied for by a mobile terminal may also be used only by the mobile terminal itself, and as a result, the storage space of the mobile terminal is expanded. The cost of storage space on the network side is far lower than that on the mobile terminal side, so a mobile terminal may obtain a large storage space at a very low cost.

Through setting of time duration, the shared storage space which is no longer used by the mobile terminal may be recovered by the network side server in time. It is especially suitable for users who only want to exchange file temporarily. As a result, waste of storage spaces on the network side caused by users' negligence may be prevented.

A user of a mobile terminal is endowed with ability to open a network application service by itself. Since the user is allowed to run an uploaded executable program on the network side server, the user of a mobile terminal may develop application service for other mobile terminals by uploading small routines. Because a harmlessness check is performed in advance, security of the network side server itself may be ensured.

### Brief Description of the Drawings

Fig.1 is a simplified structure diagram showing a system for mobile terminals to share a storage space according to an embodiment of the invention;

Fig.2 is a simplified flow chart showing a method for mobile terminals to share a storage space according to the first embodiment of the invention;

Fig.3 is a simplified flow chart showing a method for mobile terminals to share a storage space according to the second embodiment of the invention; and

Fig.4 is a simplified flow chart showing a method for mobile terminals to share a storage space according to the third embodiment of the invention.

### Detailed Description of the Embodiments

The above and other objects, technical solutions and advantages of the present invention will become better understood with respect to the following description of the exemplary embodiments given in conjunction with the accompanying drawings.

An embodiment of the present invention includes: a mobile terminal applies to a network side server for a shared storage space, and if the application is valid, the network side server allocates a shared storage space to the mobile terminal and generates authentication information or acquires authentication information from the mobile terminal, thus the mobile terminal may log on to the network side server with the authentication information and operate on the storage space applied for. If the mobile terminal allows other mobile terminals to access the storage space it applies for, the mobile terminal needs to set access rights for the other mobile terminals. These other mobile terminals, after logging on to the network side server, can only operate within their rights.

The structure of a system for mobile terminals to share a storage space according to one embodiment of the invention will now be illustrated in conjunction with the drawings.

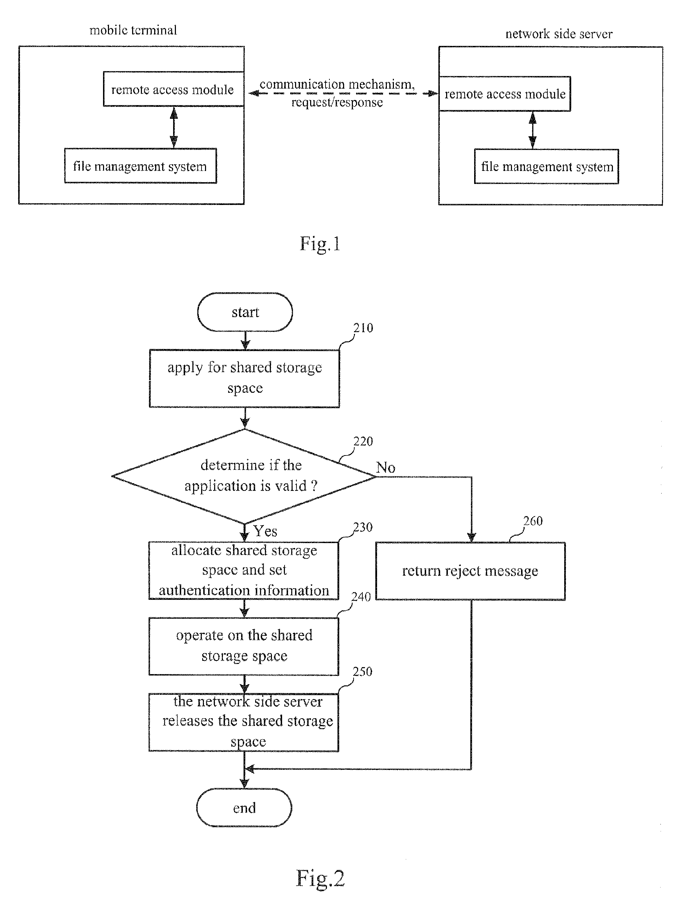

As shown in Fig.1, the present system includes two parts: a mobile terminal and a network side server.

The mobile terminal includes a file management system of the mobile terminal and a remote access module of the mobile terminal, wherein, the file management system is used for managing a local storage space and providing an interface for operating on the local storage space to other modules in the mobile terminal; the remote access module is used for invoking interface functions of a related file system and accomplishing reading or writing from/to various files, setting file properties, and exchanging signaling and data through communication connection with the network side server, and it may be built into the mobile terminal as a basic module, or may be loaded into the mobile terminal as an additional module when a shared storage space is needed to be accessed, and it may be realized in operating systems such as PALM OS, WINDOWS CE, etc in JAVA, Binary Runtime Environment for Wireless (BREW for short), and so on. The remote access module is a cross operating system platform module independent of the file system.

The network side server includes a network-side file management system and a network-side remote access module, wherein, the file management system is used for managing a local storage space and providing an interface for operating on the local storage space to other modules of the network side server; the remote access module is used for exchanging messages and data with a mobile terminal and invoking an interface provided by the local file management system for a mobile terminal which applies for a shared storage space, allocating a shared storage space to the mobile terminal, and setting authentication information for accessing the shared storage space. A mobile terminal which logs on successfully invokes an interface provided by a local file management system according to an operating command in a received message so as to perform operations on the shared storage space according to the command and returns operation result information to the corresponding mobile terminal.

The structure of a system for mobile terminals to share a storage space has been illustrated above. A dynamic work process of the system will now be briefly illustrated.

The remote access module in a mobile terminal sends a message applying for a shared storage space to a network side server. After receiving the message, the remote access module of the network side server invokes an interface provided by a local file management system to allocate a shared storage space to the mobile terminal, generates authentication information or sends a message requesting authentication information and obtains the authentication information in a response message from the mobile terminal.

After the remote access module in a mobile terminal successfully logs on to a network side server through communication connection, the network-side remote access module invokes an interface provided by a local file management system according to an operating command in a received message so as to perform operations on the shared storage space according to the command and returns operation result information to the mobile terminal.

Notably, the communication mechanism between the mobile terminal and the remote access module in the network side server may be realized using a private protocol, that is, a privately defined request-response mechanism is adopted to achieve data and signaling exchange between mobile terminals on the basis of the original communication link; of course, it may be realized using the existing standard protocol.

The first embodiment of the invention will now be illustrated in detail in conjunction with the drawings, in which a shared storage space on a network side server applied for by a mobile terminal is used only by the mobile terminal itself.

As shown in Fig. 2, in step 210, after establishing a connection with a network side server through a wired or wireless access technology, a mobile terminal applies to a network side server for a shared storage space in a negotiated format and communication mode. A message applying for a shared storage space sent by the mobile terminal to the network side server includes one or any combination of the following: size of the shared storage space applied for, time duration, application type and identification of the mobile terminal.

Then, proceed to step 220, in which the network side server deter mines whether the application is valid. If the application is valid, then proceed to step 230, in which the network side server allocates a shared storage space and sets authentication information; or if the application is invalid, proceed to step 260, in which the network side server returns a reject message to the mobile terminal and the process ends.

In step 230, the network side server allocates a corresponding shared storage space to the mobile terminal and sets authentication information for accessing the shared storage space according to the application (or in conjunction with a preset strategy in the network side server). The authentication information includes a user name and password for accessing the shared storage space. The authentication information may be generated by the network side server, or may be provided by the mobile terminal. For example, the network side server may generate authentication information including a user name and password for accessing a shared storage space applied for by a mobile terminal and send the authentication information to the mobile terminal; or the network side server may send a message to the mobile terminal, requesting the mobile terminal to provide authentication information, and the mobile terminal, after receiving the message, returns a response message carrying authentication information input by a user.

Then, proceed to step 240, in which the mobile terminal logs on to the network side server with the authentication information obtained in step 230, and operates on the shared storage space applied for, including read/write access to the shared storage space, upload of an executable program and modification of the authentication information for the shared storage space, etc. The logon and the use of a shared storage space may not immediately follow the application, and it may be that the shared storage space is applied for first and be logged on and used some time later (for example, one day later).

If an operation performed by the mobile terminal is to upload an executable program, after the mobile terminal logs on to the network side server successfully and uploads the executable program to the network side server, it is also required to send a message to the network side server, requesting the network side server to execute the executable program; after receiving the message, the network side server checks whether the executable program is harmful and executes the executable program if it is harmless, wherein, the harmlessness check includes, but not limited to, searching for potentially harmful code segment.

If an operation performed by the mobile terminal is to modify authentication information for the shared storage space applied for, it is required to authenticate whether the mobile terminal is the one which applies for the shared storage space. Specifically, the mobile terminal needs to send a message carrying identification information of the mobile terminal, such as International Mobile Equipment Identity (IMEI for short) or handset number, etc, to the network side server, requesting the network side server to modify the authentication information. After receiving the message, the network side server determines whether the mobile terminal identification information carried in the message consists with the identification information of the mobile terminal which applies for the shared storage space, and if yes, it modifies the authentication information for the shared storage space according to the request in the message; otherwise, it returns a reject message.

After the duration of time (for example, 3 days) of the shared storage space set by the network side server according to a preset strategy expires, proceed to step 250, in which the network side server actively releases the shared storage space, and informs the mobile terminal which applies for the shared storage space. In this step, a duration of time is preset by the network side server, and the network side server will automatically release a shared storage space after the duration of time since allocation of the shared storage space, so that a shared storage space which is no longer used by the mobile terminal can be recovered by the network side server in time. It is especially suitable for users who only want to store files temporarily. As a result, waste of storage spaces on the network side caused by users' negligence may be prevented.

In the present embodiment, the storage space of a mobile terminal can be expanded through applying for shared storage space on a network side server by the mobile terminal. Since the cost of storage space on the network side is far lower than that on the mobile terminal side, a mobile terminal can obtain large storage space at a very low cost. In addition, a user of a mobile terminal is endowed with ability to open a network application service by itself. Since a user of a mobile terminal is allowed to run an uploaded executable program on the network side server, the user of a mobile terminal may develop application services for other mobile terminals by uploading small routines. Since a harmlessness check is performed in advance, the security of the network side server itself can be ensured.

The second embodiment of the invention will now be illustrated in conjunction with the drawings, in which a shared storage space on a network side server applied for by a mobile terminal can be used not only by the mobile terminals, but also by other mobile terminals.

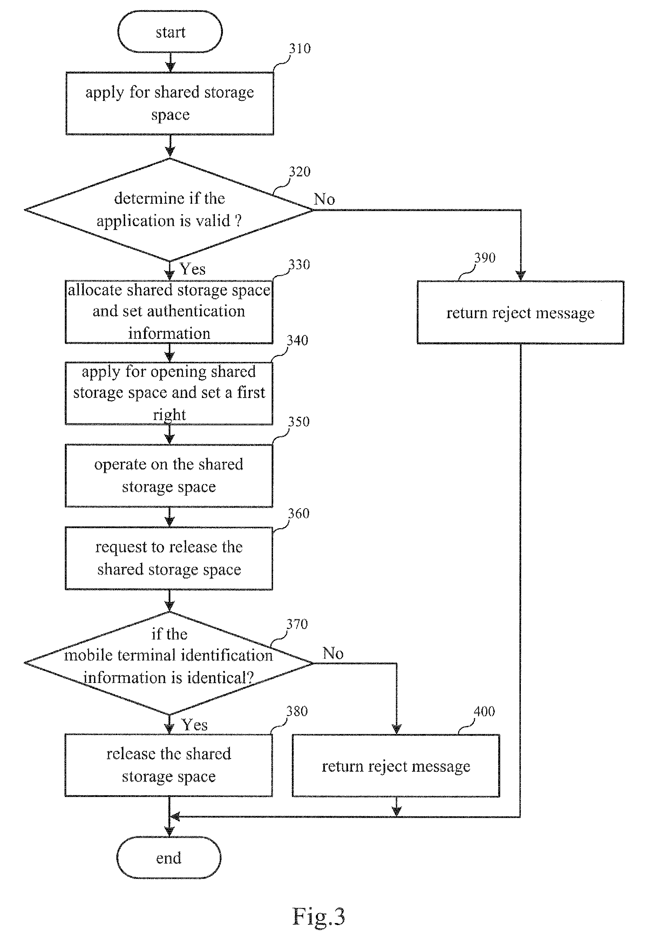

As shown in Fig.3, in step 310, after establishing a connection with a network side server through a wired or wireless access technology, a mobile terminal applies to the network side server for a shared storage space in a negotiated format and communication mode. This step is totally the same as step 210.

Then, proceed to step 320, in which the network side server deter mines whether the application is valid. If the application is valid, proceed to step 330, in which the network side server allocates a shared storage space and sets authentication information; if the application is invalid, proceed to step 390, in which the network side server returns a reject message to the mobile terminal and the process ends.

In step 330, the network side server allocates a corresponding shared storage space to the mobile terminal and sets authentication information for accessing the shared storage space according to the application (or in conjunction with a preset strategy in the network side server), This step is totally the same as step 230.

Then, proceed to step 340, in which the mobile terminal applies for opening a shared storage space and sets a first right. Because in the present embodiment, the shared storage space on the network side server applied for by the mobile terminal may be used by both the mobile terminal itself and other mobile terminals. The mobile terminal which applies for the shared storage space is required to interact with the network side server and set a first right for other mobile terminals to access the shared storage space. The right includes one or any combination of the following: newly creating a file, reading a file, modifying a file, deleting a file and modifying properties of a file, or any combination thereof.

Then, proceed to step 350, in which the mobile terminal which applies for the shared storage space or the other mobile terminals log on to the network side server using the authentication information obtained in step 330, and operate on the shared storage space. When the network side server receives a logon request from a mobile terminal, it first determines whether the mobile terminal that initiates the logon request is the one that applies for the shared storage space, and if yes, the mobile terminal is allowed to perform all operations on the shared storage space that are permitted by the preset strategy of the network side, including read-write access to the shared storage space, upload of an executable program and modification of the authentication information for the shared storage space, etc.; otherwise, the mobile terminal is only allowed to operate on the shared storage space within the first right.

When the mobile terminal no longer needs the shared storage space applied for, proceed to step 360, in which the mobile terminal which applies for the shared storage space sends a message carrying identification information of the mobile terminal to the network side server, requesting the latter to release the shared storage space.

Then, proceed to step 370, in which after the network side server receives the message requesting release of the shared storage space, it determines whether the mobile terminal identification information carried in the message is consistent with the identification information of the mobile terminal which applies for the shared storage space; and if yes, proceed to step 380, in which the shared storage space is released according to the request in the message; or if not, proceed to step 400, in which a reject message is returned to the mobile terminal which sends the message. The release of a shared storage space is a very important operation, so usually only the mobile terminal that applies for the shared storage space is allowed to perform the operation.

In the present embodiment, since the shared storage space on the network side server applied for by a mobile terminal may be used by both the mobile terminal itself and other mobile terminals, not only the function and the effect of the first embodiment can be achieved, but also file exchange between mobile terminals is facilitated. Since a shared storage space applied for by one mobile terminal can be accessed by other mobile terminals, file exchange between mobile terminals can be realized. Because an access to a shared storage space needs to be authenticated, and the authentication information is only known to the mobile terminal applying for the shared storage space and related mobile terminals informed by the mobile terminal, security of file sharing can be ensured. Since a shared storage space is on the network side, a mobile terminal, which exchanges files via the shared storage space, is not limited by geographic positions, but may be near at hand or may be far away.

According to the third embodiment of the invention, on the basis of the first and second embodiments, a mobile terminal which applies for a shared storage space specifies other mobile terminals to use the shared storage space applied for. It has been illustrated in detail in the first and second embodiments how a mobile terminal applies for a shared storage space on a network side server, thus in the present embodiment, only the flow in which other specified mobile terminals use the shared storage space will be illustrated.

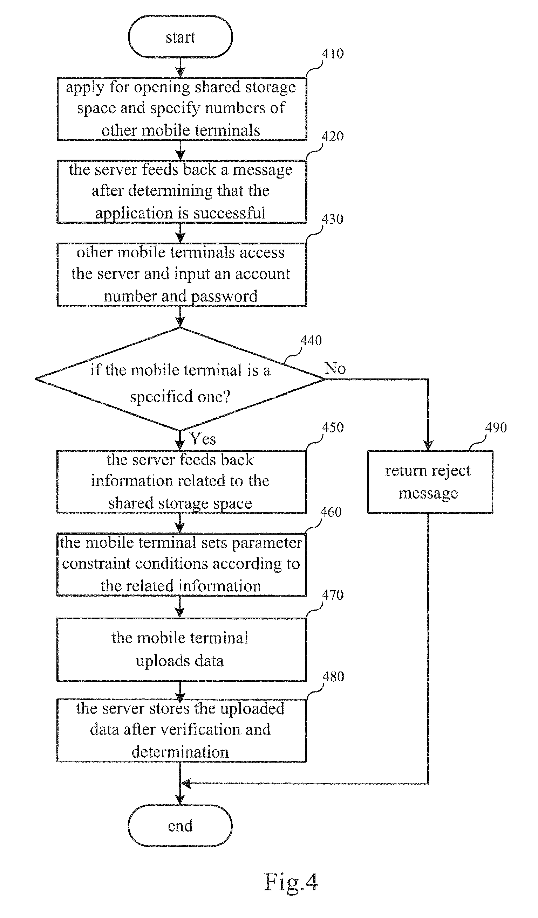

As shown in Fig.4, in step 410, a mobile terminal which applies for a shared storage space applies to the network side server to open the shared storage space, and specifies numbers of mobile terminals which may use the shared storage space.

Then, proceed to step 420, in which after the network side server receives the application, it feeds back a message to the mobile terminal sending the application after determining that the application is successful.

In step 430, another mobile terminal acc esses the server, and inputs an account number and password.

In step 440, the network side server extracts the number of the mobile terminal and determines whether the mobile terminal is a specified mobile terminal or the mobile terminal that applies for the shared storage space, and if yes, the mobile terminal is allowed to use the shared storage space, that is, proceed to step 450; or if not, proceed to step 490, in which a reject message is returned to the mobile terminal and the process ends.

In step 450, the network side server feeds back information related to the shared storage space, such as size of the shared storage space, time duration, application type and so on, to the mobile terminals.

Then, proceed to step 460, in which the mobile terminal parses the feedback information obtained in step 450, and automatically sets parameter constraint conditions for data transmission according to the parsing result.

In step 470, the mobile terminal uploads data.

Then, proceed to step 480, in which after the network side server receives the uploaded data, it verifies and determines the uploaded data, and stores in the shared storage space the uploaded data that pass the verification and determination.

In the present embodiment, security of files in the shared storage space can be increased effectively through the specification in step 410 and the determination in step 440. Since dual identification verification is set in the present embodiment: one is user name and password, and the other is number of the mobile terminal that logs on. If a user's mobile terminal gets lost or stolen, the embezzler cannot access the files in the shared storage space since he does not have the user name and password for the shared storage space. It does not matter if user name and password for the shared storage space are leaked out, for the person who gets the name and password unconsciously may not be able to get the user's mobile terminal or a specified mobile terminal.

Though the present invention has been illustrated and described by referring to some preferred embodiments of the present invention, those skilled in the art should understand that various changes may be made in form and detail without departing from the spirit and the scope of the present invention and therefore should be covered in the protection scope of the present invention defined by the appended claims and its equivalents.

## Claims

1. A method for mobile terminals to share a storage space, comprising:
A) sending a first message for applying for a shared storage space to a network side server by a first mobile terminal;
B) allocating a corresponding shared storage space to the first mobile terminal according to the first message; and setting authentication information for accessing the shared storage space;
C) the first or other mobile terminals to log on the network side server using the authentication information and perform reading or writing access to the shared storage space.

2. The method for mobile terminals to share a storage space according to claim 1, further comprising:
the network side server determining whether the applying in the first message is valid; and if it is valid, proceeding to step B; or otherwise, returning a reject message.

3. The method for mobile terminals to share a storage space according to claim 1, wherein the authentication information contains user name and password for accessing the shared storage space.

4. The method for mobile terminals to share a storage space according to claim 3, further comprising: the network side server sending the authentication information to the first mobile terminal.

5. The method for mobile terminals to share a storage space according to claim 4, further comprising:
the network side server sending a second message to the first mobile terminal for requesting the first mobile terminal to provide the authentication information; and
the first mobile terminal returning a message carrying the authentication information input by a user in response to the second message.

6. The method for mobile terminals to share a storage space according to claim 1, further comprising:
setting a duration of time for the shared storage space by the first mobile terminal or the network side server; and
when the duration of time for the shared storage space has expired, the network side server actively releasing the shared storage space and informing the first mobile terminal.

7. The method for mobile terminals to share a storage space according to claim 1, further comprising:
the first mobile terminal sending a fourth message for requesting release of the shared storage space to the network side server, wherein the fourth message carries identification information of the first mobile terminal; and
if the identification information of the mobile terminal carried in the fourth message is identical with the identification information of the mobile terminal which applies for the shared storage space, the network side server releasing the shared storage space according to the request in the fourth message.

8. The method for mobile terminals to share a storage space according to any one of claims 1 to 6, further comprising:
receiving an executable program uploaded by the first mobile terminal and a fifth message from the first mobile terminal for requesting execution of the executable program in the network side server;
performing the executable program in response to the requesting of the fifth message.

9. The method for mobile terminals to share a storage space according to any one of claims 1 to 6, further comprising:
setting on the network side server a first right, by the first mobile terminal, for other mobile terminals to access the shared storage space; and
determining, by the network side server, upon receiving a logon request of a mobile terminal, whether the logon request is initiated by the first mobile terminal, and if yes, allowing the mobile terminal to perform all operations on the shared storage space permitted by a network side preset strategy; or otherwise, allowing the mobile terminal to perform operations on the shared storage space within the scope specified by the first right.

10. The method for mobile terminals to share a storage space according to claim 9, wherein the first right comprises at least one of:
creating a file, reading a file, modifying a file, deleting a file and modifying properties of a file.

11. The method for mobile terminals to share a storage space according to any one of claims 1 to 6, wherein the first message comprises at least one of:
size of the shared storage space applied for, time duration, application type and identification of the first mobile terminal.

12. The method for mobile terminals to share a storage space according to any one of claims 1 to 6, further comprising:
the first mobile terminal sending a third message for requesting modification of the authentication information to the network side server, wherein the third message carries identification information of the first mobile terminal;
if the identification information of the mobile terminal carried in the third message is identical with the identification information of the mobile terminal which applies for the shared storage space, the network side server modifying the authentication information for the shared storage space according to the request in the third message.

13. A system for mobile terminals to share a storage space, comprising mobile terminals and a network side server, wherein the network side server further comprises a file management system for managing a local storage space and providing an interface for operating on the local storage space to other modules of the network side server, and wherein: the network side server further comprises a remote access module, used to exchange messages and data with a first mobile terminals, and after receiving a first message for applying for a shared storage space, invoke an interface provided by the local file management system so as to allocate a shared storage space to the first mobile terminal and set authentication information for accessing the shared storage space, and for a mobile terminal which logs on successfully, invoke an interface provided by the local file management system according to an operating command in a received message so as to perform operations on the shared storage space according to the command and return an operation result information to the corresponding mobile terminal.
